# EUROPEAN PATENT SPECIFICATION

(11) **EP 3 263 779 B1**
(45) Date of publication and mention of the grant of the patent: **28.02.2024**
(21) Application number: 16176446.9
(22) Date of filing: 27.06.2016
(51) Int. Cl.: E03F 5/10, E03B 3/03, E03B 3/02, E03B 1/04, E04D 13/08

(54) **A FOLDABLE RAINWATER DELAY DEVICE**
FALTBARE REGENWASSERVERZÖGERUNGSVORRICHTUNG
DISPOSITIF DE RETARD D'EAUX PLUVIALES PLIABLE

(43) Date of publication of application: 03.01.2018
(73) Proprietor: Jensen, Valdemar, 1902 Frederiksberg C (DK)
(72) Inventor: Jensen, Valdemar, 1902 Frederiksberg C (DK)
(74) Representative: Ström & Gulliksson AB

(56) References cited:
- WO-A1-2004/053242
- WO-A1-2007/095683
- WO-A1-2009/070388
- AU-A- 4 033 295
- DE-A1- 4 006 253
- NL-C1- 1 009 362
- US-A- 5 897 012
- US-A1- 2006 101 723
- US-A1- 2010 200 482
- US-A1- 2012 279 583

## Description

### Field of the invention

The present invention relates to a foldable rainwater delay device for minimising a flood-peak risk caused by a cloud burst in an area having a hard face. Also, the present invention relates to a rainwater delay system for minimising a flood-peak risk caused by a cloud burst and to a flood-peak risk minimising method.

### Backaround art

The climate is presently undergoing radical changes. More and more often, in geographical areas that did not previously experience large amounts of precipitation, cloud bursts leading to flood-peaks occur.

Drainage systems and sewers are not dimensioned to resist these very large amounts of water occurring during the course of very short time spans. Hence, infrastructure, including roads, is flooded, since the water is not led away at a pace which is sufficiently high. As a high water pressure occurs in the sewers, there is a risk that basements, shafts and underground areas are flooded, leading to massive damage to buildings as well as to the furniture, equipment and fixtures inside the buildings. In particular, this is a problem in urban areas which usually have large areas with hard faces, i.e. roofs, roads, squares etc., and it is difficult to lead the water away at a fast enough pace.

Consequently, entire sewer systems must be re-dimensioned and expanded. This is very expensive and highly inconvenient for many people during the course of the construction work.

From US 2012/279583 A1 and US 2010/200482 A1 devices for collecting rainwater from a gutter assembly are known. Other rainwater collection devices according to the state of the art are disclosed in WO 2004/053242 A1, WO 2007/095683 A1, AU 40332 95 A and also WO 2009/070388 A1.

Thus there is need for a solution which in a simple manner can remedy the major inconveniences associated with the risk of flood-peaks.

### Summary of the invention

It is an object of the present invention to wholly or partly overcome the above disadvantages and drawbacks of the prior art. More specifically, it is an object to provide a foldable rainwater delay device, which may easily be connected with existing rainwater distribution conduits, and thereby minimise the flood-peak risk caused by cloud burst in areas having hard faces.

The above objects, together with numerous other objects, advantages and features, which will become evident from the below description, are accomplished by a solution in accordance with claim 1.

Hereby a foldable rainwater delay device is obtained which, in an easy manner, may be connected to existing rainwater distribution conduits without having to alter and change for instance the sewer systems. The foldable rainwater delay device may be placed above-ground, meaning that it is not necessary to make room for the device sub-terrain.

The foldable closed bag may comprise a first part and a second part, the first part being arranged above the second part.

Moreover, the first inlet may be arranged in the first part and the first outlet may be arranged in the second part.

Also, the outlet valve unit may be configured to provide a flow when the rainwater present in the foldable closed bag is above a predetermined level.

The outlet valve unit may be configured to provide a flow when the rainwater present in the foldable closed bag is above a predetermined pressure.

Moreover, the bypass valve unit may have a movable member configured to be arranged in the rainwater distribution conduit, the movable member having a first position and a second position, in which first position the movable member ensures flow of rainwater past the bypass valve unit, and in which second position the movable member ensures flow of rain water to the foldable closed bag via the hose.

Furthermore, the movable member may be configured to switch from the first position to the second position when a pressure and/or flow in the rainwater distribution conduit are/is higher than a predetermined pressure and/or flow.

Additionally, the movable member may be configured to switch from the second position to the first position when a pressure and/or flow in the rainwater distribution conduit are/is lower than the predetermined pressure and/or flow.

Further, the movable member may be connected with a spring having a spring force, the spring force being equal to the predetermined pressure and/or flow so that the spring maintains the movable member in the first position until the pressure and/or flow in the rainwater distribution conduit are/is higher than the predetermined pressure and/or flow and vice versa.

The foldable closed bag may comprise a second outlet having a pressure controlled overflow valve, the pressure controlled overflow valve being configured to let rainwater out of the foldable closed bag when an internal bag pressure exceeds a predetermined level.

Also, the hose may be made of a flexible material.

Moreover, the hose may have an inner hose diameter which is substantially equal to or larger than an inner diameter of the rainwater distribution conduit.

Furthermore, the flexible material may be foldable and/or rollable. The flexible material may be canvas, textile or a polymeric material, polyurethane (PU), thermoplastic polyurethane (TPU), butyl rubber (BR), polyvinylchloride (PVC), polychloroprene (CR), polyethylene (PE), or a combination thereof.

Additionally, the foldable closed bag may comprise a second inlet having a one-way valve, the one-way valve being configured to be connected with a pump enabling the compartment to be emptied by pressurising the internal volume by air.

Also, the bypass valve unit may comprise a flow sensor and/or a pressure sensor.

Further, the bypass unit may comprise a flow measurement unit configured to measure a flow in a rainwater distribution conduit, the flow measurement unit being connected with the bypass valve unit.

The bypass unit may further comprise a control unit configured to control the bypass valve unit.

Moreover, the bypass unit may comprise a communication unit.

Said communication unit may be configured to communicate with an external device such as a mobile device, a cellular phone, a personal computer, a remote control device and/or a tablet.

Also, the communication unit may be configured to receive an alert from a weather forecast supplier.

Furthermore, the bypass valve unit may be configured to be activated remotely.

In addition, the bypass valve unit may comprise a valve outlet being connectable to the second end of the hose, the second end of the hose having a first connection part and the valve outlet having a second connection part, the first connection part being releasably connectable with the second connection part.

The outlet valve unit may be configured to let rainwater out into the surroundings.

Also, the first house part may comprise a plurality of house sub-parts.

Furthermore, the housing may be made of a partly or fully rigid material for protecting the foldable closed bag when in its folded state inside the housing.

In addition, the housing may be configured to be movable.

Moreover, the housing may comprise one or more wheels.

The housing may have an opening through which the hose is extending.

Further, the housing may be configured to be secured to a wall of a building.

The foldable closed bag may comprise:
- a third inlet,
- a second hose having a first end and a second end, the first end of the hose being connectable to the third inlet, and
- a second bypass valve unit connectable to a second rainwater distribution conduit and to the second end of the hose.

Also, the foldable closed bag may comprise a plurality of first outlets, each first outlet being arranged with an outlet valve unit.

The foldable closed bag may comprise a second outlet, the second outlet being configured to be connected with a first inlet of a second foldable closed bag arranged in series with the foldable closed bag.

Moreover, the foldable closed bag may comprise a second outlet, the second outlet being configured to be fluidly connected to a second foldable closed bag.

The present invention also relates to a rainwater delay system for minimising a flood-peak risk caused by a cloud burst, comprising:
- a hard face,
- a rainwater distribution conduit being fluidly connected with the hard face so that rainwater from the hard face is led away from the hard face via the rainwater distribution conduit, and
- a foldable rainwater delay device according to any of the preceding claims.

Said rainwater delay system according to the present invention may further comprise a building.

In an embodiment, the hard surface may be a roof of the building.

Further, the rainwater distribution conduit may extend vertically from the hard surface towards the ground.

In addition, the foldable rainwater delay device may be arranged in the vicinity of the rainwater distribution conduit.

The above-ground rainwater delay system may further comprise a plurality of rainwater distribution conduits.

Each rainwater distribution conduit may be connectable to a foldable above-ground rainwater delay device.

The two or more rainwater distribution conduits may be connectable to a foldable above-ground rainwater delay device.

Also, the building may be located in an urban area with large areas having a hard surface.

The hard surface may have an area, the internal volume of one or more foldable closed bag(s) having a size larger than a worst-case scenario volume based on historical average downpour volumes.

The present invention furthermore relates to a flood-peak risk minimising method, comprising:
- providing a foldable rainwater delay device as described above,
- connecting the bypass valve unit to a rainwater distribution conduit, and
- connecting the hose to the bypass valve unit.

The flood-peak risk minimising method described above may further comprise filling rainwater into the internal volume of the foldable closed bag via the bypass valve unit by leading the rainwater from the rainwater distribution conduit into the foldable closed bag instead of into a sewer or a drain.

Further, the flood-peak risk minimising method described above may comprise arranging the foldable rainwater delay device above-ground.

Moreover, the flood-peak risk minimising method described above may comprise continuously emptying the foldable closed bag via the outlet valve unit when a predetermined volume or pressure inside the foldable closed bag is reached.

Furthermore, the foldable closed bag may provide a real-time relief of the sewer or drain during a cloud burst.

### Brief description of the drawings

The invention and its many advantages will be described in more detail below with reference to the accompanying schematic drawings, which for the purpose of illustration show some non-limiting embodiments and in which
Fig. 1 shows an embodiment of a foldable rainwater delay device according to the present invention,
Fig. 2 shows another embodiment of the foldable rainwater delay device,
Figs. 3-4 show an embodiment of a bypass valve unit arranged in a rainwater distribution conduit,
Fig. 5 shows another embodiment of a bypass valve unit,
Fig. 6 shows a housing for the foldable closed bag,
Fig. 7 shows the foldable closed bag being filled and the housing being open,
Fig. 8 shows two foldable closed bags arranged fluidly in series, and
Fig. 9 shows a system for minimising a flood-peak risk caused by a cloud burst.

All the figures are highly schematic and not necessarily to scale, and they show only those parts which are necessary in order to elucidate the invention, other parts being omitted or merely suggested.

### Detailed description of the invention

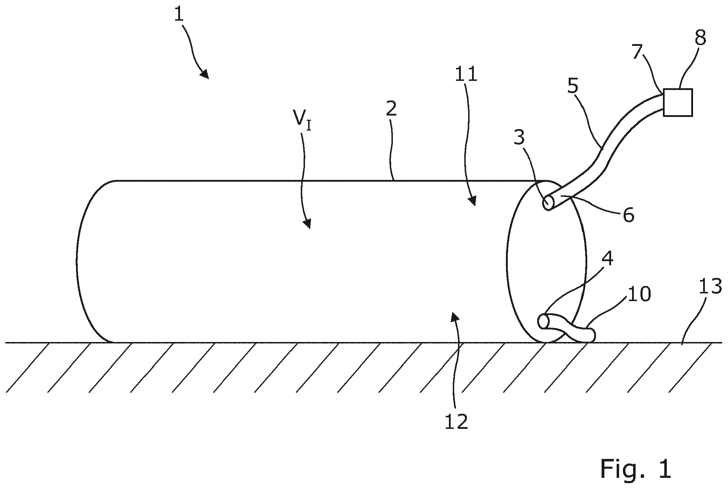

Fig. 1 shows a foldable rainwater delay device 1 according to the present invention. The foldable rainwater delay device 1 is configured to minimise a risk for flood-peak caused by a cloud burst in an area having hard faces such as roofs of a building. The foldable rainwater delay device 1 is configured to be connected with a rainwater distribution conduit, such as a drainpipe, configured to lead rainwater away from the hard face.

The foldable rainwater delay device 1 comprises a foldable closed bag 2 made of a flexible material and having a first inlet 3 and a first outlet 4 and an internal volume V_{I}, and a hose 5 having a first end 6 and a second end 7, the first end 6 of the hose 5 being connectable to the first inlet 3. In addition, a bypass valve unit 8 is connectable to the rainwater distribution conduit and to the second end 7 of the hose 5, and an outlet valve unit 10 is arranged in the first outlet 4.

The foldable closed bag 2 comprises a first part 11 and a second part 12, the first part 11 being arranged above the second part 12. The first inlet 3 is, in this embodiment, arranged in the first part 11, and the first outlet 4 is arranged in the second part 12. Hereby it is obtained that the foldable closed bag 2 is filled from the top, i.e. the first part 11, and will be emptied from the bottom, i.e. the second part 12.

The foldable closed bag 2 is, in this embodiment, shown as cylinder-shaped. However, it may have other shapes.

The foldable closed bag 2 is configured to be folded and/or rolled when not in use so that it only occupies little space. In addition, the foldable closed bag 2 will expand, meaning that its internal volume V_{I} will expand when rainwater is being filled into the interior of the foldable closed bag 2 while the foldable closed bag 2 unfolds.

The foldable closed bag 2 is made of a flexible material having properties so that it may be folded and/or rolled. The flexible material may be canvas, textile or a polymeric material, polyurethane (PU), thermoplastic polyurethane (TPU), butyl rubber (BR), polyvinylchloride (PVC), polychloroprene (CR), polyethylene (PE), or a combination thereof. In addition, the flexible material may also have some inherent resiliency properties enabling the flexible material to expand while the internal volume is being filled. Advantageously, the foldable closed bag may be used multiple times.

The foldable closed bag 2 is preferably a closed compartment, except for the first inlet and the first outlet, so that the rainwater is maintained for a period of time inside the foldable closed bag 2 before it is let out via the first outlet.

In addition, the foldable rainwater delay device 1 is configured to be used above-ground 13 as shown in Fig. 1, whereby an expedient and inexpensive solution for minimising the flood-peak risks caused by cloud burst is provided.

The rainwater entering the foldable closed bag 2 via the first inlet 3 may have a first flow rate, and the rainwater leaving the foldable closed bag 2 via the first outlet 4 may have a second flow rate, the first flow rate being different from second flow rate.

Advantageously, the first flow rate is larger than the second flow rate during the filling of the foldable closed bag 2, whereby the rainwater will be accumulated inside the foldable closed bag 2 for a period a time before it is let out of the foldable closed bag 2 with a delay. Furthermore, the outlet valve unit 10 is configured to provide a flow when the rainwater present in the foldable closed bag is above a predetermined level and/or when the rainwater present in the foldable closed bag 2 is above a predetermined pressure.

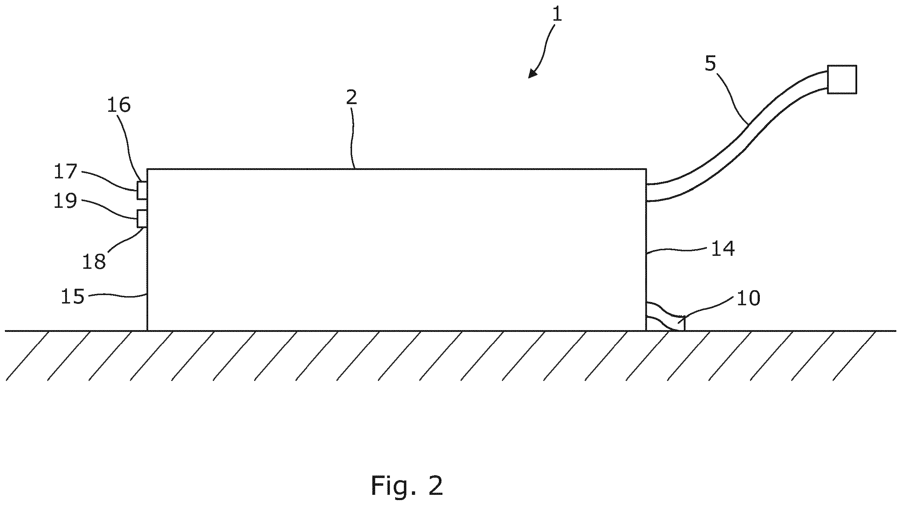

In Fig. 2, another foldable rainwater delay device 1 is shown in a side view. The foldable rainwater delay device 1 has substantially the same features as the foldable rainwater delay device 1 of Fig. 1. However, in Fig. 2 the foldable closed bag 2 of the foldable rainwater delay device 1 has a first bag end 14 and a second bag end 15. In this embodiment, the hose 5 and the outlet valve unit 10 are arranged in the first bag end 14. In the second bag end 15, a second outlet 16 having a pressure controlled overflow valve 17 is arranged. The pressure controlled overflow valve 17 is configured to let rainwater out of the foldable closed bag 2 when an internal bag pressure exceeds a predetermined level, whereby the risk of the foldable closed bag 2 bursting if being excessively filled is minimised.

In the second bag end 15 a second inlet 18 having a one-way valve 19 is arranged. The one-way valve 19 is configured to be connected with a pump (not shown) enabling the inside of the bag 2 to be emptied by pressurising the internal volume by air. Hence, when the foldable closed bag 2 has been used and the risk for flood-peaks caused by cloud bursts is gone, the foldable closed bag 2 is to be refolded and stored for future use. In this circumstance it is expedient that the inside of the bag 2 is emptied from water.

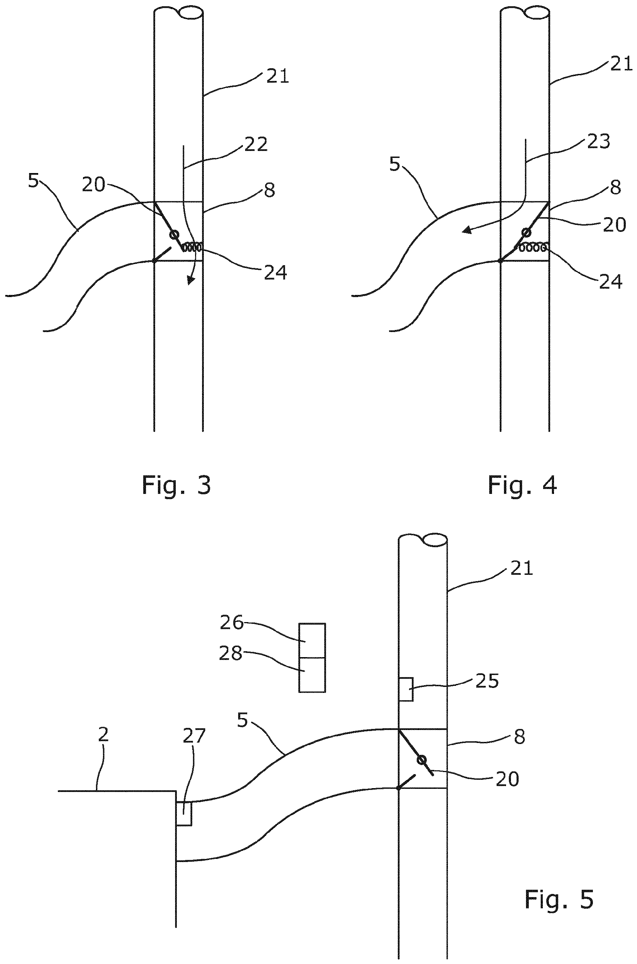

In Figs. 3 and 4, an embodiment of the bypass valve unit 8 is shown. The bypass valve unit 8 has a movable member 20 configured to be arranged in the rainwater distribution conduit 21. The movable member 20 has a first position and a second position. In the first position, the movable member 20 ensures flow of rainwater past the bypass valve unit 8 as indicated by arrow 22 in Fig. 3, and in the second position, the movable member 20 ensures flow of rainwater to the foldable closed bag via the hose 5 as indicated by arrow 23 in Fig. 4.

The movable member 20 is configured to switch from the first position to the second position when a pressure and/or flow in the rainwater distribution conduit 21 are/is larger than a predetermined pressure and/or flow. In addition, the movable member 20 is configured to switch from the second position to the first position when a pressure and/or flow in the rainwater distribution conduit 21 are/is lower than the predetermined pressure and/or flow.

In the embodiment shown in Figs. 3 and 4, the movable member 20 is connected with a spring 24 having a spring force, the spring force being equal to the predetermined pressure and/or flow so that the spring 24 maintains the movable member 20 in the first position until the pressure and/or flow in the rainwater distribution conduit are/is higher than the predetermined pressure and/or flow and vice versa.

In Fig. 5, another embodiment of the bypass valve unit 8 is shown. The bypass valve unit 8 may comprise a flow sensor 25 and/or a pressure sensor arranged upstream of the bypass valve unit 8 in the rainwater distribution conduit 21.

Moreover, a flow measurement unit is configured to measure a flow in a rainwater distribution conduit, the flow measurement unit being connected with the bypass valve unit 8.

A control unit 26 is also arranged which is configured to control the bypass valve unit 8 based on signals received for instance from the flow sensor 25. When the flow sensor 25 measures a higher flow than a predetermined level, it sends a signal to the control unit 26 which again activates the movable member 20 by switching it from the first position to the second position. In this embodiment, a motor (not shown) is arranged for moving the movable member 20.

In addition, a second pressure sensor 27 may be arranged near the first inlet or in the hose 5 for measuring the pressure inside the foldable closed bag 2. The second pressure sensor 27 may also be connected with the control unit 26 and may inform the control unit to switch the movable member 20 to the first position when the measured pressure in the foldable closed bag 2 exceeds a predetermined level.

Furthermore, a communication unit 28 is arranged in the device. The communication unit 28 may be configured to communicate with an external device such as a mobile device, a cellular phone, personal computer and/or a tablet so that the device may be activated remotely.

The communication unit 28 may also be configured to receive a cloud burst risk alert from a weather forecast supplier, thereby setting the device in ready-to-use mode.

The bypass valve unit may be designed so that it may easily be retrofitted in known rainwater distribution conduits. In addition, the bypass valve unit may comprise an valve outlet being connectable to the second end of the hose, the second end of the hose having a first connection part and the valve outlet having a second connection part, the first connection part being releasably connectable with the second connection part.

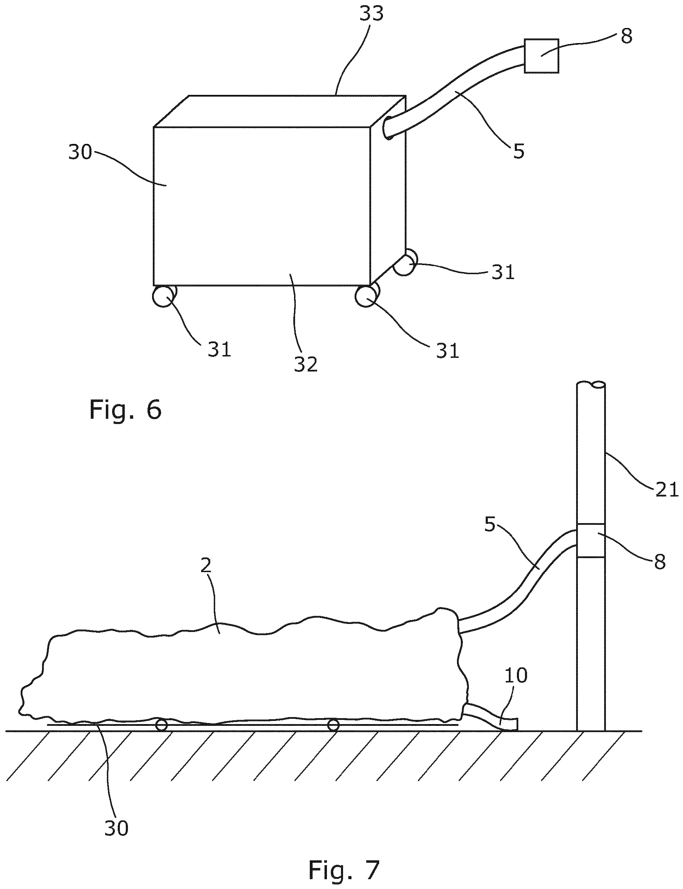

The foldable rainwater delay device according to the present invention comprises a housing 30 configured to enclose the foldable closed bag when the foldable closed bag is in its folded and/or rolled state. In Fig. 6, an embodiment of the housing 30 is shown having wheels 31 so that it is movable. Thus, the housing 30 may then be provided from a storage room when there is a cloud burst risk. The bypass valve unit 8 may either be mounted in the rainwater distribution conduit (not shown) or it may be easily connectable. In the same manner, the hose 5 may be easy to connect either to the bypass valve unit or the first inlet.

According to the invention, the housing 30 is configured to be self-opening during the filling of the internal volume of the foldable closed bag. Hereby it is obtained that the housing does not need to be opened by a user.

The housing 30 comprises a first house part 32 and a second house part 33, the first house part 32 being movable in relation to the second house part 33 for allowing the the foldable closed bag to expand in volume when being filled with rainwater. Obviously, the housing may also comprise additional house parts or a plurality of house sub-parts which may be movable in relation to each other.

The housing 30 is made of a partly or fully rigid material for protecting the foldable closed bag when being in its folded state inside the housing. The material may for instance be glass-fibre or similar material.

In Fig. 7, it is shown that the housing 30 has been opened and the foldable closed bag 2 is being filled with rainwater from the rainwater distribution conduit 21 via the bypass valve unit 8 through the hose 5 into the bag.

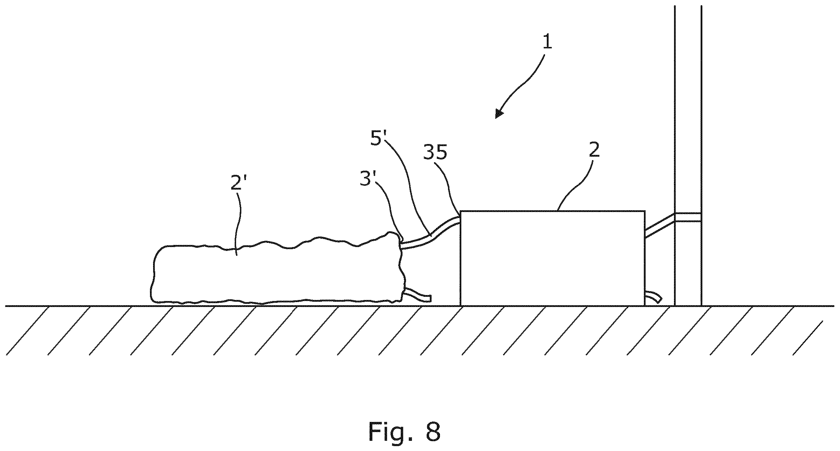

In Fig. 8, the foldable closed bag 2 comprises a second outlet 35, the second outlet 35 being configured to be connected with a first inlet 3' of a second foldable closed bag 2' arranged in series with the the foldable closed bag 2. The second foldable closed bag 2' and the foldable closed bag 2 are connected by the hose 5'. By providing an additional foldable closed bag 2' in series with a first foldable closed bag 2, it is possible to enhance the capacity of the device 1 under circumstances in which the device shall provide delay in rainwater distribution to the sewers of a large area with hard faces.

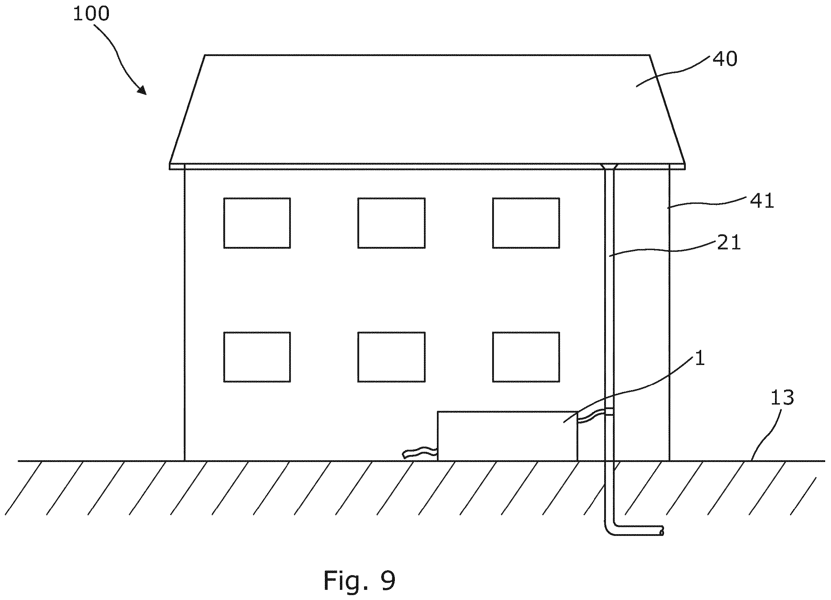

In Fig. 9, a system 100 for minimising a flood-peak risk caused by a cloud burst is shown. The system 100 comprises a hard face 40, here in the form of a roof, a rainwater distribution conduit 21 being fluidly connected with the hard face 40 so that rainwater from the hard face 40 is led away from the hard face 40 via the rainwater distribution conduit 21, and a foldable above-ground rainwater device 1 as described above.

Furthermore, the system 100 comprises a building 41. As seen in Fig. 9, the rainwater distribution conduit 21 extends vertically from the hard face 40 towards the ground 13. The foldable above-ground rainwater device 1 is arranged in the vicinity of the rainwater distribution conduit 21.

Moreover, a plurality of rainwater distribution conduits may be positioned around the building for leading rainwater away from the roof. Each rainwater distribution conduit may be connectable to a foldable rainwater delay device. In another embodiment, two or more rainwater distribution conduits may be connectable to a foldable rainwater delay device.

Although the invention has been described in the above in connection with preferred embodiments of the invention, it will be evident for a person skilled in the art that several modifications are conceivable without departing from the invention as defined by the following claims.

## Claims

1. A foldable rainwater delay device (1) for minimising a flood-peak risk caused by a cloud burst in an area having a hard face (40), the foldable above-ground rainwater device (1) being configured to be connected with a rainwater distribution conduit (21), such as a drainpipe, configured to lead rainwater away from the hard face, comprising:
- a foldable closed bag (2, 2') made of a flexible material and having a first inlet (3) and a first outlet (4) and an internal volume (Vi),
- a hose (5) having a first end (6) and a second end (7), the first end of the hose being connectable to the first inlet (3),
- a bypass valve unit (8) connectable to the rainwater distribution conduit (21) and to the second end (7) of the hose, and
- an outlet valve unit (10) arranged in the first outlet (4),
the rainwater entering the foldable closed bag (2) via the first inlet (3) has a first flow rate, and rainwater leaving the foldable closed bag (2) via the first outlet (4) has a second flow rate, the first flow rate being different from the second flow rate, and wherein the first flow rate is larger than the second flow rate during the filling of the foldable closed bag, **characterized in that**
- a housing (30) configured to enclose the foldable closed bag when the foldable closed bag is in its folded state,
wherein the housing (30) is configured to be self-opening during the filling of the internal volume of the foldable closed bag, and the housing (30) comprises a first house part and a second house part, the first house part being movable in relation to the second house part in order to allow the foldable closed bag to expand in volume when being filled with rainwater.

2. A foldable rainwater delay device (1) according to claim 1, wherein the foldable closed bag (2) comprises a first part (11) and a second part (12), the first part being arranged above the second part.

3. A foldable rainwater delay device (1) according to claim 2, wherein the first inlet (3) is arranged in the first part and the first outlet (4) is arranged in the second part.

4. A foldable rainwater delay device (1) according to any of the preceding claims, wherein the outlet valve unit (10) is configured to provide a flow when the rainwater present in the foldable closed bag (2) is above a predetermined level.

5. A foldable rainwater delay device (1) according to any of the preceding claims, wherein the outlet valve unit is configured to provide a flow when the rainwater present in the foldable closed bag (2) is above a predetermined pressure.

6. A foldable rainwater delay device (1) according to any of the preceding claims, wherein the bypass valve unit (8) has a movable member (20) configured to be arranged in the rainwater distribution conduit (21), the movable member having a first position and a second position, in which first position the movable member (20) ensures flow of rainwater past the bypass valve unit (8), and in which second position the movable member (20) ensures flow of rain water to the foldable closed bag via the hose (5).

7. A foldable rainwater delay device (1) according to claim 6, wherein the movable member (20) is configured to switch from the first position to the second position when a pressure and/or flow in the rainwater distribution conduit (21) are/is higher than a predetermined pressure and/or flow.

8. A foldable rainwater delay device (1) according to any of the preceding claims, wherein the bypass valve unit (8) comprises a valve outlet being connectable to the second end of the hose, the second end of the hose having a first connection part and the valve outlet having a second connection part, the first connection part being releasably connectable with the second connection part.

9. A foldable rainwater delay device (1) according to any of the preceding claims, wherein the bypass unit comprises a control unit configured to control the bypass valve unit.

10. A foldable rainwater delay device (1) according to claim 9, wherein the bypass unit comprises a communication unit, said communication unit is configured to communicate with an external device such as a mobile device, a cellular phone, a personal computer, a remote control device and/or a tablet.

11. A foldable rainwater delay device (1) according to any of the preceding claims, wherein the bypass valve unit is configured to be activated remotely.

12. A foldable rainwater delay device (1) according to claim 1, wherein the housing is made of a partly or fully rigid material for protecting the foldable closed bag when in its folded state inside the housing.

13. A foldable rainwater delay device (1) according to any of the preceding claims, wherein the housing has an opening through which the hose is extending.

14. A rainwater delay system (100) for minimising a flood-peak risk caused by a cloud burst, comprising:
- a hard face (40),
- a rainwater distribution conduit (21) being fluidly connected with the hard face so that rainwater from the hard face is led away from the hard face via the rainwater distribution conduit,
- a building (41), and
- a foldable rainwater delay device (1) according to any of the preceding claims.

15. A flood-peak risk minimising method, comprising:
- providing a foldable rainwater delay device (1) according to any of the claims 1-13,
- connecting the bypass valve unit (8) to a rainwater distribution conduit (21), and
- connecting the hose (5) to the bypass valve unit (8).

## Patentansprüche

1. Faltbare Regenwasserrückhaltevorrichtung (1) zur Minimierung eines Überschwemmungsspitzenrisikos, das durch einen Wolkenbruch in einem Bereich mit einer feste Oberfläche (40) verursacht wird, wobei die faltbare oberirdische Regenwasservorrichtung (1) so ausgebildet ist, dass sie mit einer Regenwasserverteilungsleitung (21), wie z.B. einem Abflussrohr, verbunden werden kann, die ausgebildet ist, Regenwasser von der festen Oberfläche wegzuführen, umfassend:
- einen faltbaren, geschlossenen Beutel (2, 2') aus einem flexiblen Material, der einen ersten Einlass (3) und einen ersten Auslass (4) sowie ein Innenvolumen (V_{I}) aufweist,
- einen Schlauch (5) mit einem ersten Ende (6) und einem zweiten Ende (7), wobei das erste Ende des Schlauches mit dem ersten Einlass (3) verbunden werden kann,
- eine Bypass-Ventileinheit (8), die an die Regenwasserverteilungsleitung (21) und an das zweite Ende (7) des Schlauchs angeschlossen werden kann, und
- eine im ersten Auslass (4) angeordnete Auslassventileinheit (10),
wobei das über den ersten Einlass (3) in den faltbaren geschlossenen Beutel (2) eintretende Regenwasser eine erste Durchflussmenge aufweist und das den faltbaren geschlossenen Beutel (2) über den ersten Auslass (4) verlassende Regenwasser eine zweite Durchflussmenge aufweist, wobei sich die erste Durchflussmenge von der zweiten Durchflussmenge unterscheidet, und wobei die erste Durchflussmenge während des Befüllens des faltbaren geschlossenen Beutels größer als die zweite Durchflussmenge ist,
**dadurch gekennzeichnet, dass**
- ein Gehäuse (30) so ausgebildet ist, dass es den faltbaren geschlossenen Beutel umschließt, wenn sich der faltbare geschlossene Beutel in seinem zusammengefalteten Zustand befindet,
wobei das Gehäuse (30) so ausgebildet ist, dass es sich während des Füllens des Innenvolumens des faltbaren geschlossenen Beutels selbst öffnet, und das Gehäuse (30) ein erstes Gehäuseteil und ein zweites Gehäuseteil umfasst, wobei das erste Gehäuseteil relativ zu dem zweiten Gehäuseteil beweglich ist, um dem faltbaren geschlossenen Beutel zu ermöglichen, sein Volumen auszudehnen, wenn er mit Regenwasser gefüllt wird.

2. Faltbare Regenwasserrückhaltevorrichtung (1) nach Anspruch 1, wobei der faltbare geschlossene Beutel (2) einen ersten Teil (11) und einen zweiten Teil (12) umfasst, wobei der erste Teil über dem zweiten Teil angeordnet ist.

3. Faltbare Regenwasserrückhaltevorrichtung (1) nach Anspruch 2, wobei der erste Einlass (3) im ersten Teil und der erste Auslass (4) im zweiten Teil angeordnet ist.

4. Faltbare Regenwasserrückhaltevorrichtung (1) nach einem der vorhergehenden Ansprüche, wobei die Auslassventileinheit (10) ausgebildet ist, einen Durchfluss bereitzustellen, wenn das in dem faltbaren geschlossenen Beutel (2) vorhandene Regenwasser über einem vorgegebenen Pegel liegt.

5. Faltbare Regenwasserrückhaltevorrichtung (1) nach einem der vorhergehenden Ansprüche, wobei die Auslassventileinheit ausgebildet ist, einen Durchfluss bereitzustellen, wenn das in dem faltbaren geschlossenen Beutel (2) vorhandene Regenwasser über einem vorgegebenen Druck liegt.

6. Faltbare Regenwasserrückhaltevorrichtung (1) nach einem der vorhergehenden Ansprüche, wobei die Bypass-Ventileinheit (8) ein bewegliches Element (20) aufweist, das so ausgebildet ist, dass es in der Regenwasserverteilungsleitung (21) angeordnet ist, wobei das bewegliche Element eine erste Stellung und eine zweite Stellung aufweist, wobei das bewegliche Element (20) in der ersten Stellung einen Fluss von Regenwasser an der Bypass-Ventileinheit (8) vorbei gewährleistet, und wobei das bewegliche Element (20) in der zweiten Stellung einen Fluss von Regenwasser über den Schlauch (5) zu dem faltbaren geschlossenen Beutel gewährleistet.

7. Faltbare Regenwasserrückhaltevorrichtung (1) nach Anspruch 6, wobei das bewegliche Element (20) so ausgebildet ist, dass es von der ersten Stellung in die zweite Stellung schaltet, wenn ein Druck und/oder ein Durchfluss in der Regenwasserverteilungsleitung (21) höher als ein vorgegebener Druck und/oder Durchfluss ist/sind.

8. Faltbare Regenwasserrückhaltevorrichtung (1) nach einem der vorhergehenden Ansprüche, wobei die Bypass-Ventileinheit (8) einen Ventilauslass aufweist, der mit dem zweiten Ende des Schlauches verbindbar ist, wobei das zweite Ende des Schlauches einen ersten Verbindungsteil und der Ventilauslass einen zweiten Verbindungsteil aufweist, wobei der erste Verbindungsteil lösbar mit dem zweiten Verbindungsteil verbindbar ist.

9. Faltbare Regenwasserrückhaltevorrichtung (1) nach einem der vorhergehenden Ansprüche, wobei die Bypass-Einheit eine Steuereinheit umfasst, die zur Steuerung der Bypass-Ventileinheit ausgebildet ist.

10. Faltbare Regenwasserrückhaltevorrichtung (1) nach Anspruch 9, wobei die Bypass-Einheit eine Kommunikationseinheit umfasst, wobei die Kommunikationseinheit ausgebildet ist, um mit einer externen Vorrichtung, wie einem Mobilgerät, einem Mobiltelefon, einem Personalcomputer, einer Fernsteuerungsvorrichtung und/oder einem Tablet, zu kommunizieren.

11. Faltbare Regenwasserrückhaltevorrichtung (1) nach einem der vorhergehenden Ansprüche, wobei die Bypass-Ventileinheit ausgebildet ist, aus der Ferne aktiviert zu werden.

12. Faltbare Regenwasserrückhaltevorrichtung (1) nach Anspruch 1, wobei das Gehäuse aus einem teilweise oder vollständig starren Material zum Schutz des faltbaren geschlossenen Beutels in seinem zusammengefalteten Zustand innerhalb des Gehäuses hergestellt ist.

13. Faltbare Regenwasserrückhaltevorrichtung (1) nach einem der vorhergehenden Ansprüche, wobei das Gehäuse eine Öffnung aufweist, durch die der Schlauch verläuft.

14. Regenwasserrückhaltesystem (100) zur Minimierung eines durch einen Wolkenbruch verursachten Überschwemmungsspitzenrisikos, das Folgendes umfasst:
- eine feste Oberfläche (40),
- eine Regenwasserverteilungsleitung (21), die in Fluidverbindung mit der festen Oberfläche steht, so dass Regenwasser von der festen Oberfläche über die Regenwasserverteilungsleitung von der festen Oberfläche abgeführt wird,
- ein Gebäude (41), und
- eine faltbare Regenwasserrückhaltevorrichtung (1) nach einem der vorhergehenden Ansprüche.

15. Verfahren zur Minimierung des Hochwasserrisikos, das Folgendes umfasst:
- Bereitstellung einer faltbaren Regenwasserrückhaltevorrichtung (1) nach einem der Ansprüche 1-13,
- Verbinden der Bypass-Ventileinheit (8) mit einer Regenwasserverteilungsleitung (21), und
- Anschluss des Schlauchs (5) an die Bypass-Ventileinheit (8).

## Revendications

1. Dispositif de retard d'eaux pluviales pliable (1) pour minimiser un risque de pic d'inondation provoqué par une pluie torrentielle dans une zone ayant une face dure (40), le dispositif d'eaux pluviales hors-sol pliable (1) étant configuré pour être raccordé à un conduit de distribution d'eaux pluviales (21), tel qu'une gouttière, configuré pour évacuer les eaux pluviales depuis la face dure, comprenant :
- un sac fermé pliable (2, 2') constitué d'un matériau souple et ayant une première entrée (3) et une première sortie (4) et un volume interne (V_{I}),
- un tuyau (5) ayant une première extrémité (6) et une seconde extrémité (7), la première extrémité du tuyau pouvant être raccordée à la première entrée (3),
- une unité de vanne de dérivation (8) pouvant être raccordée au conduit de distribution d'eaux pluviales (21) et à la seconde extrémité (7) du tuyau, et
- une unité de vanne de sortie (10) agencée dans la première sortie (4),
les eaux pluviales entrant dans le sac fermé pliable (2) via la première entrée (3) ont un premier débit, et les eaux pluviales quittant le sac fermé pliable (2) via la première sortie (4) ont un second débit, le premier débit étant différent du second débit, et dans lequel le premier débit est supérieur au second débit lors du remplissage du sac fermé pliable, **caractérisé en ce que**
- un boîtier (30) configuré pour enfermer le sac fermé pliable lorsque le sac fermé pliable est dans son état plié,
dans lequel le boîtier (30) est configuré pour s'ouvrir automatiquement pendant le remplissage du volume interne du sac fermé pliable, et le boîtier (30) comprend une première partie de logement et une seconde partie de logement, la première partie de logement étant mobile par rapport à la seconde partie de logement pour permettre au sac fermé pliable de se dilater en volume lorsqu'il est rempli d'eaux pluviales.

2. Dispositif de retard d'eaux pluviales pliable (1) selon la revendication 1, dans lequel le sac fermé pliable (2) comprend une première partie (11) et une seconde partie (12), la première partie étant agencée au-dessus de la seconde partie.

3. Dispositif de retard d'eaux pluviales pliable (1) selon la revendication 2, dans lequel la première entrée (3) est agencée dans la première partie et la première sortie (4) est agencée dans la seconde partie.

4. Dispositif de retard d'eaux pluviales pliable (1) selon l'une quelconque des revendications précédentes, dans lequel l'unité de vanne de sortie (10) est configurée pour fournir un écoulement lorsque les eaux pluviales présentes dans le sac fermé pliable (2) sont au-dessus d'un niveau prédéterminé.

5. Dispositif de retard d'eaux pluviales pliable (1) selon l'une quelconque des revendications précédentes, dans lequel l'unité de vanne de sortie est configurée pour fournir un écoulement lorsque les eaux pluviales présentes dans le sac fermé pliable (2) sont au-dessus d'une pression prédéterminée.

6. Dispositif de retard d'eaux pluviales pliable (1) selon l'une quelconque des revendications précédentes, dans lequel l'unité de vanne de dérivation (8) a un élément mobile (20) configuré pour être agencé dans le conduit de distribution d'eaux pluviales (21), l'élément mobile ayant une première position et une seconde position, dans laquelle première position l'élément mobile (20) assure un écoulement d'eaux pluviales au-delà de l'unité de vanne de dérivation (8), et dans laquelle seconde position l'élément mobile (20) assure un écoulement d'eaux pluviales vers le sac fermé pliable via le tuyau (5).

7. Dispositif de retard d'eaux pluviales pliable (1) selon la revendication 6, dans lequel l'élément mobile (20) est configuré pour basculer de la première position à la seconde position lorsqu'une pression et/ou un débit dans le conduit de distribution d'eaux pluviales (21) est/sont supérieur(s) à une pression et/ou un débit prédéterminés.

8. Dispositif de retard d'eaux pluviales pliable (1) selon l'une quelconque des revendications précédentes, dans lequel l'unité de vanne de dérivation (8) comprend une sortie de vanne pouvant être raccordée à la seconde extrémité du tuyau, la seconde extrémité du tuyau ayant une première partie de raccordement et la sortie de vanne ayant une seconde partie de raccordement, la première partie de raccordement pouvant être raccordée de manière amovible à la seconde partie de raccordement.

9. Dispositif de retard d'eaux pluviales pliable (1) selon l'une quelconque des revendications précédentes, dans lequel l'unité de dérivation comprend une unité de commande configurée pour commander l'unité de vanne de dérivation.

10. Dispositif de retard d'eaux pluviales pliable (1) selon la revendication 9, dans lequel l'unité de dérivation comprend une unité de communication, ladite unité de communication est configurée pour communiquer avec un dispositif externe tel qu'un dispositif mobile, un téléphone cellulaire, un ordinateur personnel, une télécommande et/ou une tablette.

11. Dispositif de retard d'eaux pluviales pliable (1) selon l'une quelconque des revendications précédentes, dans lequel l'unité de vanne de dérivation est configurée pour être activée à distance.

12. Dispositif de retard d'eaux pluviales pliable (1) selon la revendication 1, dans lequel le boîtier est constitué d'un matériau partiellement ou totalement rigide pour protéger le sac fermé pliable lorsqu'il est dans son état plié à l'intérieur du boîtier.

13. Dispositif de retard d'eaux pluviales pliable (1) selon l'une quelconque des revendications précédentes, dans lequel le boîtier a une ouverture à travers laquelle le tuyau s'étend.

14. Système de retard d'eaux pluviales (100) pour minimiser un risque de pic d'inondation provoqué par une pluie torrentielle, comprenant :
- une face dure (40),
- un conduit de distribution d'eaux pluviales (21) qui est raccordé de manière fluidique avec la face dure de sorte que les eaux pluviales provenant de la face dure sont évacuées de la face dure via le conduit de distribution d'eaux pluviales,
- un bâtiment (41), et
- un dispositif de retard d'eaux pluviales pliable (1) selon l'une quelconque des revendications précédentes.

15. Procédé de minimisation du risque de pic d'inondation, comprenant :
- la fourniture d'un dispositif de retard d'eaux pluviales pliable (1) selon l'une quelconque des revendications 1 à 13,
- le raccordement de l'unité de vanne de dérivation (8) à un conduit de distribution d'eaux pluviales (21), et
- le raccordement du tuyau (5) à l'unité de vanne de dérivation (8).
